# EUROPÄISCHE PATENTSCHRIFT

(11) **EP 0 578 645 B1**
(45) Veröffentlichungstag und Bekanntmachung des Hinweises auf die Patenterteilung: **23.04.1997**
(21) Anmeldenummer: 92904918.7
(22) Anmeldetag: 19.02.1992
(51) Int. Cl.: C09D 7/14, C09D 5/02

(54) **VERFAHREN ZUR HERSTELLUNG VON AUTOREPARATURLACKEN**
METHOD FOR PRODUCING MOTOR CAR REPAIR PAINTS
METHODE POUR LA PRODUCTION DE PEINTURES POUR LA REPARATION DES CARROSSERIES DE VOITURE

(30) Priorität: 30.03.1991 DE 4110520
(43) Veröffentlichungstag der Anmeldung: 19.01.1994
(60) Teilanmeldung: 96114012.6
(73) Patentinhaber: BASF Lacke + Farben AG, 48165 Münster-Hiltrup (DE)
(72) Erfinder: MAYER, Bernd, 48165 Münster (DE); PIONTEK, Susanne, 48165 Münster (DE); WEGNER, Egon, 48143 Münster (DE)
(74) Vertreter: Fitzner, Uwe, Dr.
(86) Internationale Anmeldenummer: EP9200351
(87) Internationale Veröffentlichungsnummer: WO9217554

(56) Entgegenhaltungen:
- EP-A- 0 121 308
- EP-A- 0 195 931
- EP-A- 0 311 209
- EP-A- 0 368 499
- EP-A- 0 399 427
- EP-A- 0 468 293
- EP-A- 0 471 972

## Beschreibung

Die vorliegende Erfindung betrifft ein Verfahren zur Herstellung von Überzugsmitteln mit genau festgelegter Tönung, bei dem verschiedene Basisfarben getrennt gelagert und erst kurz vor der Applikation zu dem Überzugsmittel in dem gewünschten Farbton gemischt werden.

Übliche Verfahren zur Ausbesserung von Schadstellen an einer gegebenenfalls mehrschichtigen Lackierung beinhalten die sorgfältige Reinigung und Schleifen, ggf. Spachteln und Füllern an der Schadstelle. Danach wird die Schadstelle ggf. nach einer weiteren Vorbehandlung üblicherweise deckend und auslaufend in die angrenzenden Bereiche hinein mit Effektlacken, wie z. B. Metallicbasislacken, oder mit Unilacken gespritzt. Nach Antrocknung des so hergestellten Überzuges werden der Überzug und die angrenzenden Teile mit einem Klarlack überspritzt und nach einer ggf. notwendigen Ablüftzeit wird der Klarlacküberzug gemeinsam mit den vorher aufgebrachten Schichten vorzugsweise bei Temperaturen zwischen 50 und 100 °C getrocknet.
Als Effekt-Lacke und/oder im Zweischichtverfahren aufgebrachte Unilacke für das Ausbessern von Schadstellen werden üblicherweise festkörperarme Lacke verwendet, die neben Bindemitteln farb- und/oder effektgebende Pigmente und einen hohen Anteil organischer Lösemittelgemische enthalten.
Diese Lacke werden entweder vom Lackhersteller im gewünschten Farbton geliefert, oder der Farbton wird vor der Applikation aus einem Mischsystem mehrerer Basisfarben hergestellt. Diese Herstellung aus einem Mischsystem hat den Vorteil, daß nicht jeder Farbton einzeln hergestellt und bevorratet werden muß und daß somit Produktions-, Distributions- und Lagerhaltungskosten gesenkt werden können. In beiden Fällen ist es notwendig, daß die gelieferten Lacke eine ausreichende Lagerstabilität (mindestens 12 Monate) aufweisen. Für ein Mischsystem hat außerdem die Farbtongenauigkeit der Basisfarben eine große Bedeutung.

Während im Bereich der Serienlackierung zunehmend wasserverdünnbare Basislacke eingesetzt werden, werden im Bereich der Autoreparaturlackierung noch konventionelle, d.h. lösemittelhaltige, Basislacke eingesetzt. Diese bisher für die Reparaturlackierung verwendeten festkörperarmen Basislacke haben eine von den bisher für die Serienlackierung verwendeten wasserverdünnbaren Basislacken deutlich verschiedene Zusammensetzung. So erfolgt beispielsweise die Rheologiesteuerung bei den konventionellen Systemen zum größten Teil über die Verdunstungsgeschwindigkeit der organischen Lösemittel (Festkörperanstieg zwischen Applikationsgerät und zu lackierendem Objekt), während bei den wäßrigen Systemen die Rheologiesteuerung durch externe Verdickungsmittel oder durch entsprechende Modifikationen im Bindemittel erfolgt. Für den Übergang von konventionellen zu wasserverdünnbaren Systemen ist daher ein bloßer Austausch der verwendeten Bindemittel gegen wasserverdünnbare Bindemittel nicht ausreichend.
Auch der Einsatz der im Bereich der Serienlackierung verwendeten wasserverdünnbaren Systeme im Bereich der Reparaturlackierung ist aufgrund der unterschiedlichen Anforderungen an die Systeme in beiden Bereichen zur Zeit nicht möglich. Die für die Serienlackierung (Fahrzeugerstlackierung) verwendeten wasserverdünnbaren Metallic-Basislacke weisen nämlich keine für den Bereich der Reparaturlackierung ausreichende Lagerstabilität auf, da bei diesen wasserverdünnbaren Lacken Probleme bei der Gasungsstabilität (H₂-Bildung durch Reaktion von Wasser mit der Aluminiumbronze) und/oder Effektstabilität auftreten. Beides beeinträchtigt nachhaltig den Farbton bzw. die Aufsichthelligkeit der resultierenden Beschichtungen. Daher sind diese Systeme in der Reparaturlackierung nicht zum Einsatz gekommen.

Aber nicht nur Effektpigmente enthaltende wasserverdünnbare Lacke zeigen Probleme hinsichtlich der Lagerstabilität. Auch farbgebende Pigmente können durch längere Einwirkung von Wasser, z. B. in alkalischem Medium, angegriffen werden. Um keiner zu großen Einschränkung bei der Auswahl der handelsüblichen Pigmente zu unterliegen, besteht auch ein Bedarf für die Formulierung von lagerstabilen Basisfarben mit diesen farbgebenden Pigmenten.

Aus wirtschaftlichen Gründen, zur Verbesserung der Arbeitssicherheit (Brandschutz) und zur Verringerung der Umweltbelastung beim Trocknen der Lackfilme ist man auch im Bereich der Reparaturlackierung bemüht, organische Lösemittel in den Überzugsmitteln so weit wie möglich zu reduzieren. Die mangelnde Lagerstabilität der bekannten wasserverdünnbaren Basislacke verhinderte jedoch bisher den Aufbau eines oben beschriebenen Mischsystems aus derartigen wasserverdünnbaren Basislacken.

Aus der EP-A-320 552 ist nun ein Verfahren zur Herstellung eines mehrschichtigen Überzugs bekannt, bei dem auf das mit einem Füller versehene Substrat zunächst eine wäßrige, bevorzugt Metallicpigmente enthaltende Überzugszusammensetzung aufgebracht und getrocknet wird, ehe ein üblicher Wasserbasislack und anschließend ein Klarlack aufgebracht werden. Durch die Applikation der wäßrigen Überzugszusammensetzung vor der Basecoat/Clearcoat-Beschichtung soll eine Verbesserung des Metalliceffektes, insbesondere der Aufsichthelligkeit, erreicht werden.
Dieses in der EP-A-320 552 beschriebene Verfahren ist hauptsächlich für die Herstellung einer Erstlackierung geeignet, jedoch wird in der Beschreibung auch auf die Möglichkeit hingewiesen, dieses Verfahren im Bereich der Reparaturlackierung einzusetzen.

Die in dem Verfahren der EP-A 320 552 eingesetzten wäßrigen Überzugszusammensetzung werden durch Einarbeiten einer Aluminiumpigmentpaste in wäßrige Mischlacke hergestellt. Die verwendete Aluminiumpaste stellt dabei eine Anteigung von Aluminium-Bronze in organischen Lösemitteln und einem Emulgator dar. Diese Aluminiumpaste setzt aber schon innerhalb weniger Stunden ab und führt so zu Bodensatz. Dies wiederum führt aber regelmäßig zu Farbtonabweichungen. Diese abgesetzte Paste ist nur bedingt mit geeigneten Rühraggregaten aufrührbar. Außerdem stehen Lackierern in der Regel derartige Rühraggregate nicht zur Verfügung. Derartige Aluminiumpasten sind daher für den Aufbau von Mischsystemen für die Reparaturlackierung nicht geeignet.

Auch die nach Einarbeitung der Aluminiumpaste in die wäßrigen Mischlacke erhaltenen wäßrigen Überzugszusammensetzungen zeigen eine unzureichende Lagerstabilität, die nicht den Anforderungen der Lackierer genügt.

Weiterhin sind aus der EP-A-195 931 und der EP-A-297 576 wäßrige Überzugsmittel für die Herstellung eines Mehrschichtüberzuges im Bereich der Serienlackierung bekannt. Die Herstellung der wäßrigen Überzugsmittel erfolgt durch Einarbeitung einer Pigmentpaste in die wäßrige Bindemitteldispersion. Die Pigmentpaste wird dabei durch Anreiben der entsprechenden Pigmente mit möglichst geringen Mengen eines Anreibeharzes sowie ggf. mit organischen Lösemitteln und ggf. mit Wasser hergestellt. Der Aufbau eines Mischsystems für den Bereich der Reparaturlackierung und die hierfür erforderlichen Maßnahmen, wie zum Beispiel die getrennte Lagerung einzelner Komponenten, sind jedoch in der EP-A-195 931 und der EP-A-297 576 nicht beschrieben. Die pigmentierten wäßrigen Überzugsmittel selbst sind dabei aufgrund der unzureichenden Lagerstabilität nicht für den Bereich der Reparaturlackierung geeignet.

Auch aus der EP-B-38 127 sind wäßrige Überzugsmittel für die Herstellung eines Mehrschichtüberzuges im Bereich der Serienlackierung bekannt. Die Herstellung der wäßrigen Überzugsmittel erfolgt wiederum durch Einarbeiten einer Pigmentpaste in die wäßrige Bindemitteldispersion. Die Pigmentpaste wird dabei durch Anreiben der Pigmente mit einem Melaminharz sowie organischen Lösemitteln hergestellt. Der Aufbau eines Mischsystmes für den Bereich der Reparaturlackierung und die hierfür erforderlichen Maßnahmen sind aber wiederum nicht beschrieben. Auch diese pigmentierten wäßrigen Überzugsmittel der EP-B-38 127 sind aufgrund einer unzureichenden Lagerstabilität nicht für den Bereich der Reparaturlackierung geeignet.

In der EP-A-368 499 sind wasserverdünnbare, insbesondere Metallicpigmente enthaltende Beschichtungsmassen mit einer verbesserten Lagerstabilität beschrieben. Die Lagerstabilität wird dadurch erzielt, daß zunächst eine wasserfreie Bindemittellösung aus 25 bis 95 Gew.-% eines Polyether- bzw. Polyesterpolyols, 2,5 bis 50 Gew.-% eines Aminoplastharzes und 0 bis 50 Gew.-% eines organischen Lösemittels hergestellt wird, in die die Pigmente eingearbeitet werden. Diese Bindemittellösung wird kurz vor der Applikation mit Wasser auf die jeweils gewünschte Viskosität eingestellt.
In der EP-A-368 499 ist die Verwendung der wasserfreien Bindemittellösungen in einem Mischsystem nicht beschrieben. Außerdem ist die Verwendung der Beschichtungsmassen der EP-A-368 499 unter Reparaturbedingungen nicht möglich, da der hohe Polyether/Polyester-Anteil nicht zu ausreichend wasserfesten Filmen führt. Ferner ist der erreichte metallische Effekt bei weitem nicht ausreichend für die Fahrzeugerst- oder -reparaturlackierung.

Aus der Europäischen Patentanmeldung 0 399 427 ist Basislackformulierung bestehend aus 5 Komponenten a bis e bekannt. Die Komponente a besteht aus einem organisch gelösten Polyacrylat-, Polyester- oder Alkyd-Harz und hierin dispergierten Metallflocken. Die Komponente *b* besteht aus einem wasserverdünnbaren Harz, das mit Aminen, die im Überschuß zugegeben werden, neutralisiert ist. Die Komponente c besteht aus einer Acryllatex und einem hydrophilen Siliciumdioxid. Die Komponente d ist aus einer Acryllatex in farbgebenden Pigmenten zusammengesetzt, Die Komponente e enthält schließlich einen oberflächenaktiven Fluorkohlenwasserstoff.

Die genannten Komponenten müssen entweder einzeln unter Rühren zugegeben oder nach jeder Zugabe muß intensiv gerührt werden, um Schockerscheinungen zu vermeiden. Ein weiterer entscheidender Nachteil gemäß der EP 0 399 427 ist, daß die effektgebenden und die farbqebenden Pigmente in zwei unterschiedlichen Komponenten a und d bereitgestellt werden. Damit verändert sich das Mischungsverhältnis der in den Komponenten a und d enthaltenden Bindemittel je nach Farbton. Das heißt, je nach Wahl des Farbtons ändern sich mit der Änderung des Bindemittelmischungsverhältnisses auch die Eigenschaften des Lackes, Andererseits muß bei der Herstellung eines Uni-Lackes Effektpigmente weggelassen werden, so daß nur noch die Acryllatex aus den Komponenten c und d als Bindemittel vorhanden wären. Nachteilig ist auch, daß in der Komponente d zur Dispergierung der farbgebenden Pigmente eine Acryllatex verwendet wird. Diese Vorgehensweise bereitet technisch erhebliche Probleme, insbesondere hinsichtlich der Stabilität.

Aus der vorangemeldeten und nachveröffentlichten EP 0468 293 sind Formulierungen bestehend aus aus vier Komponenten a bis d bekannt. Hierbei entsprechen die Komponenten a bis c den oben beschriebenen Komponenten a, b und d der EP 0 399 427. Die Komponente c der EP 0 399 427 ist in dem Gemisch nicht enthalten.

Die EP 0 471 972 ist ebenfalls vorangemeldet und nachveröffentlicht. Hierbei handelt es sich um eine aus den Komponenten a bis d bestehende Formulierung. Die Komponente a besteht hierbei aus einem Aluminium enthaltendenwasserverdünnbaren Acrylatharz. Für die Komponente b ist zwingend eine Acryllatex vorgeschrieben. Die Komponente b enthält ein Reologiemittel.

Schließlich ist es aus dem Zeitschriftenartikel von Hauska und Racz in Farbe und Lack, 93. Jahrgang, Heft 2, 1987, Seiten 103 bis 105 bekannt, die Lagerstabilität von wäßrigen Farbdispersionen u.a. dadurch zu verbessern, daß zur Herstellung der wäßrigen Farbdispersionen Aluminiumpasten eingesetzt werden, die neben Aluminiumpigment ein Bindemittel enthalten, das mit dem Aluminiumpigment mischbar und vor dem Verbrauch mit Wasser verdünnbar ist. Die in diesem Zeitschriftenartikel für die Herstellung der Aluminiumpaste genannten Bindemittel eignen sich jedoch nicht für den Einsatz in wäßrigen Überzugsmitteln für den Bereich der Autoreparaturlackierung. Entsprechend wird auch bereits in dem Zeitschriftenartikel festgestellt, daß diese Methode keine industrielle Bedeutung hat. Außerdem sind auch in diesem Zeitschriftenartikel der Aufbau eines Mischsystems sowie die hierfür erforderlichen Maßnahmen nicht beschrieben.

Der vorliegenden Erfindung liegt somit die Aufgabe zugrunde, ein Verfahren zur Verfügung zu stellen, das die Herstellung wasserverdünnbarer Überzugsmittel mit genau festgelegter Tönung aus verschiedenen Basisfarben ermöglicht. Insbesondere sollte dieses Verfahren die Herstellung wäßriger Überzugsmittel ermöglichen, die für die Reparaturlackierung, insbesondere von Schadstellen an Automobilkarossen, geeignet sind. Dabei sollte eine hohe Farbtongenauigkeit der Basisfarben gewährleistet sein, um so die gewünschten Farbtöne ohne aufwendige Maßnahmen beim Lackierer möglichst exakt und reproduzierbar einstellen zu können. Dies bedeutet auch, daß die für das Verfahren verwendeten Basisfarben eine sehr gute Lagerstabilität (> 12 Monate) aufweisen müssen. Schließlich sollten die mittels des Verfahrens hergestellten wäßrigen Überzugsmittel sowohl im Falle von Effektlacken als auch im Falle von Unifarbtönen zu Beschichtungen mit guten mechanischen Eigenschaften führen.

Dabei sollte das Verfahren die Formulierung von Überzugsmitteln gewährleisten, die ein hohes Qualitätsniveau bei einem im Vergleich zu den üblicherweise hergestellten Überzugsmitteln verringerten Anteil an organischen Lösemitteln gewährleisten.

Diese Aufgabe wird überraschenderweise durch ein Verfahren zur Herstellung einer Autoreparaturlackierung gelöst, bei dem ein mehrere Basisfarben enthaltendes Mischsystem bereitgestellt, aus dem Mischsystem ein Reparaturlack mit genau festgelegter Tönung hergestellt und anschließend appliziert und getrocknet wird, dadurch gekennzeichnet, daß die Basisfarben (Komponente A) weniger als 5 % Wasser sowie
Aa) 0,5 bis 70 Gew.-% mindestens eines Effektpigments, und/oder mindestens eines farbgebenden Pigments,
Ab) 10 bis 80 Gew.-% mindestens eines wasserverdünnbaren oder wasserdispergierbaren Polyurethanharzes und/oder Aminoplastharzes und/oder Polyacrylatharzes und/oder Polyesterharzes und
Ac) mindestens ein organisches Lösemittel
enthalten, wobei die Summe der Gewichtsanteile der Komponenten Aa) bis Ac) jeweils 100 Gew.-% beträgt und mit einer Komponente (B) vermischt werden, die pigmentfrei ist und Wasser, ein oder mehrere wasserverdünnbare oder wasserdispergierbare Polyurethanharze und/oder Aminoplastharze und/oder Polyesterharze sowie ggf. weitere Hilfs- und Zusatzstoffe enthält.

Es ist überraschend und war nicht vorhersehbar, daß durch das erfindungsgemäße Verfahren die Herstellung von wäßrigen Überzugsmassen ermöglicht wird, die sich durch eine exakte und reproduzierbare Einstellung des gewünschten Farbtons auszeichnen, ohne daß hierzu aufwendige Maßnahmen erforderlich sind. Gewährleistet wird dies durch eine hohe Farbtongenauigkeit und eine entsprechend gute Lagerstabilität der Basisfarben. Ein weiterer Vorteil ist darin zu sehen, daß die erfindungsgemäß hergestellten Basisfarben gegen Einfrieren/Auftauen unempfindlich sind. Weiterhin weisen die so hergestellten wäßrigen Überzugsmassen den Vorteil auf, daß sie zu Beschichtungen mit guten mechanischen Eigenschaften führen.

Vorteilhaft ist ferner, daß durch das erfindungsgemäße Verfahren im Bereich der Reparaturlackierung Überzugsmittel zur Verfügung gestellt werden, die den hohen Anforderungen hinsichtlich der Qualität der Reparaturlackierung gerecht werden und dazu als Lösemittel überwiegend Wasser enthalten und in denen organische Lösemittel nur noch in geringen Mengen enthalten sind. Neben wirtschaftlichen Vorteilen führt dieser reduzierte Lösemittelanteil zur Verbesserung der Arbeitssicherheit (Brandschutz) und zur Verringerung der Umweltbelastung beim Trocknen der Lackfilme. Dies ist insbesondere im Bereich der Reparaturlackierung von Automobilkarossen von Bedeutung, da die in diesem Bereich eingesetzten Effektlacke üblicherweise einen sehr hohen Lösemittelanteil von bis zu 90 % enthalten, um einen guten Metalleffekt zu gewährleisten.

Der erfindungsmäße Einsatz im wesentlichen wasserfreier, bevorzugt völlig wasserfreier Basisfarben, bietet außerdem den Vorteil, daß für die Lagerung dieser Basisfarben Behälter verwendet werden können, die nicht (z.B. durch eine entsprechende Innenlackierung) gegen eine Korrosion durch Wasser geschützt sein müssen. Weiterhin können für die Formulierung der Basisfarben unter bestimmten Voraussetzungen auch wasserempfindliche Pigmente eingesetzt werden, wodurch die zur Verfügung stehende Auswahl an Pigmenten erheblich vergrößert wird. Im folgenden sollen nun die einzelnen im erfindungsgemäßen Verfahren eingesetzten Komponenten näher erläutert werden.

Die Komponente A kann alle lacküblichen Pigmente enthalten, vorausgesetzt, daß sie nicht innerhalb kurzer Zeit (Zeitspanne zwischen dem Zusammenrühren der Komponenten A und B und der Applikation der Lacke) mit Wasser reagieren und daß sie sich nicht in Wasser lösen. Die Komponente A kann dabei Effektpigmente und/oder farbgebende Pigmente auf anorganischer oder organischer Basis enthalten. Um eine möglichst universelle Einsatzbreite zu gewährleisten und möglichst viele Farbtöne realisieren zu können, ist es bevorzugt, eine farbgebende Pigmente enthaltende Komponente A und eine nur Effektpigmente enthaltende Komponente A zu verwenden.

Zur Herstellung der Komponente A können alle üblicherweise bei der Formulierung von wäßrigen Überzugsmitteln eingesetzten Effektpigmente eingesetzt werden.

Beispiele für geeignete Effektpigmente sind handelsübliche Aluminiumbronzen, die gemäß DE-OS 3636183 chromatierten Aluminiumbronzen, handelsübliche Edelstahlbronzen sowie andere übliche Metallplättchen und Metallflockenpigmente. Für die Herstellung der Komponente A sind auch nicht metallische Effektpigmente, wie zum Beispiel Perlglanz- bzw. Interferenzpigmente geeignet.
Beispiele für geeignete farbgebende Pigmente auf anorganischer Basis sind Titandioxid, Eisenoxide, Ruß u.ä. Beispiele für geeignete farbgebende Pigmente auf organischer Basis sind Indanthrenblau, Cromophthalrot, Irgazinorange, Sicotransgelb, Heliogengrün u.ä.

Als Bindemittel für den Einsatz in der Komponente A sind alle wasserverdünnbaren bzw. wasserdispergierbaren Polyurethanharze, Aminoplastharze, Polyacrylatharze und Polyesterharze geeignet, die üblicherweise in wäßrigen Überzugsmitteln eingesetzt werden und die sich in Form organischer Lösungen darstellen lassen. Die Wasserverdünnbarkeit bzw. Wasserdispergierbarkeit der Harze kann dabei auch durch Verwendung entsprechender Lösevermittler als Cosolvens bzw. Solvens eingestellt werden. Entscheidend für die Auswahl der Bindemittel ist einerseits die gute Lagerstabilität in organischer Lösung, insbesondere auch die Fähigkeit, ein Absetzen der Pigmente zu vermeiden, sowie andererseits die problemlose Einarbeitbarkeit der Basisfarbe in die Komponente B bzw. die problemlose Einarbeitbarkeitder Komponente B in die Basisfarbe. Die Einarbeitbarkeit der Basisfarbe in die Komponente B bzw. die umgekehrte Einarbeitbarkeit können zwar auch durch die Verwendung von Dispergieradditiven, wie zum Beispiel ionische oder nichtionische Tenside, gesteuert werden. Derartige Additive sollten aber in möglichst geringen Mengen eingesetzt werden, um die Wasserfestigkeit der resultierenden Beschichtungen nicht zu beeinträchtigen.

Insbesondere werden als Bindemittel für die Komponente A wasserverdünnbare bzw. wasserdispergierbare und in organischer Lösung darstellbare Polyurethanharze, Polyacrylatharze, Polyesterharze und Aminoplastharze sowie deren Mischungen eingesetzt.

Die als Bindemittel in den Basisfarben eingesetzten Polyurethanharze sind prinzipiell bekannt. Geeignet sind beispielsweise die in der Literatur für den Einsatz in Wasserbasislacken beschriebenen Polyurethanharze, sofern diese Polyurethanharze - in Abwandlung der in der jeweiligen Literatur beschriebenen Herstellung - in Form organischer Lösungen darstellbar sind.

Beispiele für geeignete Polyurethanharze sind die in den folgenden Schriften beschriebenen Harze: EP-A-355433, DE-OS 3545618, DE-OS 3813866 sowie die noch nicht veröffentliche deutsche Patentanmeldung DE 4005961.8.
Bezüglich näherer Einzelheiten der Herstellung der Polyurethanharze und Beispiele geeigneter Verbindungen sei daher auf diese Schriften verwiesen. Die Polyurethanharze kommen allerdings im Unterschied zu den in diesen Schriften beschriebenen Polyurethanharzen nicht als wäßrige Dispersion, sondern in einem oder mehreren organischen Lösungsmitteln gelöst zum Einsatz. Dies bedeutet, daß das Herstellverfahren der erfindungsgemäß eingesetzten Polyurethanharze gegenüber den in diesen Schriften beschriebenen Verfahren dahingehend geändert wurde, daß statt der Herstellung einer Sekundärdispersion ein Lösen der Polyurethanharze in organischen Lösemitteln erfolgt.
Bevorzugt werden wasserverdünnbare Polyurethanharze eingesetzt, die ein zahlenmittleres Molekulargewicht (Bestimmung: gelpermeationschromatographisch mit Polystyrol als Standard) von 1000 bis 30.000, vorzugsweise von 1500 bis 20000, sowie eine Säurezahl von 5 bis 70 mg KOH/g, vorzugsweise 10 bis 30 mg KOH/g aufweisen und durch Umsetzung, vorzugsweise Kettenverlängerung, von Isocyanatgruppen aufweisenden Präpolymeren herstellbar sind.

Die Herstellung des isocyanatgruppenhaltigen Präpolymeren kann durch Reaktion von Polyolen mit einer Hydroxylzahl von 10 bis 1800, bevorzugt 50 bis 1200 mg KOH/g, mit überschüssigen Polyisocyanaten bei Temperaturen von bis zu 150 °C, bevorzugt 50 bis 130 °C, in organischen Lösemitteln, die nicht mit Isocyanaten reagieren können, erfolgen. Das Äquivalentverhältnis von NCO- zu OH-Gruppen liegt zwischen 2,0:1,0 und > 1,0:1,0, bevorzugt zwischen 1,4:1 und 1,1:1.

Die zur Herstellung des Präpolymeren eingesetzten Polyole können niedermolekular und/oder hochmolokular sein und sie können reaktionsträge anionische Gruppen enthalten. Um die Härte des Polyurethans zu erhöhen, kann man niedermolekulare Polyole einsetzen. Sie haben ein Molekulargewicht von 60 bis zu etwa 400, und können aliphatische, alicyclische oder aromatische Gruppen enthalten. Es werden dabei Mengen von bis zu 30 Gew.-% der gesamten Polyol-Bestandteile, bevorzugt etwa 2 bis 20 Gew.-%, eingesetzt.
Um ein NCO-Präpolymeres hoher Flexibilität zu erhalten, sollte ein hoher Anteil eines überwiegend linearen Polyols mit einer bevorzugten OH-Zahl von 30 bis 150 mg KOH/g zugesetzt werden. Bis zu 97 Gew.-% des gesamten Polyols können aus gesättigten und ungesättigten Polyestern und/oder Polyethern mit einer Molmasse Mn von 400 bis 5000 bestehen. Die ausgewählten Polyetherdiole sollen keine übermäßigen Mengen an Ethergruppen einbringen, weil sonst die gebildeten Polymere in Wasser anquellen. Polyesterdiole werden durch Veresterung von organischen Dicarbonsäuren oder ihren Anhydriden mit organischen Diolen hergestellt oder leiten sich von einer Hydroxicarbonsäure oder einem Lacton ab. Um verzweigte Polyesterpolyole herzustellen, können in geringem Umfang Polyole oder Polycarbonsäuren mit einer höheren Wertigkeit eingesetzt werden.

Als typische multifunktionelle Isocyanate werden aliphatische, cycloaliphatische und/oder aromatische Polyisocyanate mit mindestens zwei Isocyanatgruppen pro Molekül verwendet. Bevorzugt werden die Isomeren oder Isomerengemische von organischen Diisocyanaten. Aufgrund ihrer guten Beständigkeit gegenüber ultraviolettem Licht ergeben (cyclo)aliphatische Diisocyanate Produkte mit geringer Vergilbungsneigung.
Die zur Bildung des Präpolymeren gebrauchte Polyisocyanat-Komponente kann auch einen Anteil höherwertiger Polyisocyanate enthalten, vorausgesetzt dadurch wird keine Gelbildung verursacht. Als Triisocyanate haben sich Produkte bewährt, die durch Trimerisation oder Oligomerisation von Diisocyanaten oder durch Reaktion von Diisocyanaten mit polyfunktionellen OH- oder NH-Gruppen enthaltenden Verbindungen entstehen. Die mittlere Funktionalität kann gegebenenfalls durch Zusatz von Monoisocyanaten gesenkt werden.

Zur Herstellung festkörperreicher Polyurethanharzlösungen werden insbesondere Diisocyanate der allgemeinen Formel (I) 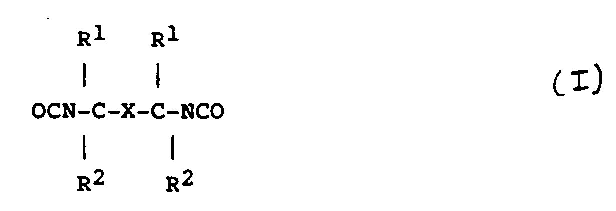 eingesetzt, wobei X für einen zweiwertigen, aromatischen Kohlenwasserstoffrest, vorzugsweise für einen gegebenenfalls halogen-, methyl- oder methoxy-substituierten Naphtylen-, Biphenylen- oder 1,2-, 1,3- oder 1,4-Phenylenrest, besonders bevorzugt für einen 1,3-Phenylenrest und R¹ und R² für einen Alkylrest mit 1 bis 4 Kohlenstoffatomen, besonders bevorzugt für einen Methylrest stehen.
Diisocyanate der Formel (I) sind bekannt (ihre Herstellung wird beispielsweise in der EP-A-101 832, US-PS-3,290,350, UP-PS-4,130,577 und US-PS-4,439,616 beschrieben) und zum Teil im Handel erhältlich (1,3-Bis(2-isocyanatoprop-2-yl)benzol wird beispielsweise von der American Cyanamid Company unter dem Handelsnamen TMXDI (META)® verkauft).

Zusätzlich zu den Diisocyanaten der Formel (I) oder stattdessen können auch noch andere aliphatische und/oder cycloalipatische und/oder aromatische Polyisocyanate eingesetzt werden. Als Beispiele für zusätzlich einsetzbare Polyisocyanate werden Phenylendiisocyanat, Toluy lendiisocyanat, Xylylendiisocyanat, Bisphenylendiisocyanat, Naphtylendiisocyanat, Diphenylmethandiisocyanat, Isophorondiisocyanat, Cyclopentylendiisocyanat, Cyclohexylendiisocyanat, Methylcyclohexylendiisocyanat, Dicyclohe xylmethandiisocyanat, Trimethylendiisocyanat, Tetramethylendiisocyanat, Pentamethylendiisocyanat, Hexamethylendiisocyanat, Propylendiisocyanat, Ethylethylendiisocyanat und Trimethylhexandiisocyanat genannt.

Polyurethane sind im allgemeinen nicht mit Wasser verträglich, wenn nicht bei ihrer Synthese spezielle Bestandteile eingebaut und/oder besondere Herstellungsschritte vorgenommen werden. So können zur Herstellung der Polyurethanharze Verbindungen verwendet werden, die zwei mit Isocyanatgruppen reagierende H-aktive Gruppen und mindestens eine Gruppe enthalten, die die Wasserdispergierbarkeit gewähr-leistet (Trägergruppen). Geeignete Trägergruppen sind nichtionische Gruppen (z. B. Polyether), anionische Gruppen, Gemische dieser beiden Gruppen oder kationische Gruppen.

So kann eine so große Säurezahl in das Polyurethanharz eingebaut werden, daß das neutralisierte Produkt stabil in Wasser zu dispergieren ist. Hierzu dienen Verbindungen, die zwei mit Isocyanatgruppen reagierende H-aktive Gruppen und mindestens eine zur Anionenbildung befähigte Gruppe enthalten. Geeignete, mit Isocyanatgruppen reagierende Gruppen sind insbesondere Hydroxylgruppen sowie primäre und/oder sekundäre Aminogruppen. Gruppen, die zur Anionenbildung befähigt sind, sind Carboxyl-, Sulfonsäure- und/oder Phosphonsäuregruppen. Bevorzugt werden Carbonsäure- oder Carboxylatgruppen verwendet. Sie sollen so reaktionsträge sein, daß die Isocyanatgruppen des Diisocyanats vorzugsweise mit den anderen gegenüber Isocyanatgruppen reaktiven Gruppen des Moleküls reagieren. Es werden dazu Alkansäuren mit zwei Substituenten am α-ständigen Kohlenstoffatom eingesetzt. Der Substituent kann eine Hydroxylgruppe, eine Alkylgruppe oder eine Alkylolgruppe sein. Diese Polyole haben wenigstens eine, im allgemeinen 1 bis 3 Carboxylgruppen im Molekül. Sie haben zwei bis etwa 25, vorzugsweise 3 bis 10 Kohlenstoffatome. Das Carboxylgruppen enthaltene Polyol kann 3 bis 100 Gew.-%, vorzugsweise 5 bis 50 Gew.-%, des gesamten Polyolbestandteiles im NCO-Präpolymeren ausmachen.
Die durch die Carboxylgruppen-Neutralisation in Salzform verfügbare Menge an ionisierbaren Carboxylgruppen beträgt im allgemeinen wenigstens 0,4 Gew.-%, vorzugsweise wenigstens 0,7 Gew.-%, bezogen auf den Feststoff. Die obere Grenze beträgt etwa 6 Gew.-%. Die Menge an Dihydroxialkansäuren im unneutralisierten-Präpolymeren ergibt eine Säurezahl von wenigstens 5, vorzugsweise wenigstens 10. Bei sehr niedrigen Säurezahlen sind i.a. weitere Maßnahmen zur Erzielung der Wasserdispergierbarkeit erforderlich. Die obere Grenze der Säurezahl liegt bei 70, vorzugsweise bei 40 mg KOH/g, bezogen auf den Feststoff.
Die erfindungsgemäß verwendeten NCO-Präpolymeren können durch gleichzeitige Umsetzung des Polyols oder Polyolgemisches mit einem Diisocyanat-Überschuß hergestellt werden. Andererseits kann die Umsetzung auch in vorgeschriebener Reihenfolge stufenweise vorgenommen werden. Beispiele sind in der DE OS 26 24 442 und der DE OS 32 10 051 beschrieben. Die Reaktionstemperatur beträgt bis zu 150 °C, wobei eine Temperatur im Bereich von 50 bis 130 °C bevorzugt wird.
Die Umsetzung wird fortgesetzt, bis praktisch alle Hydroxylfunktionen umgesetzt sind.
Das NCO-Präpolymer enthält wenigstens etwa 0,5 Gew.-% Isocyanatgruppen, vorzugsweise wenigstens 1 Gew-% NCO, bezogen auf Feststoff. Die obere Grenze liegt bei etwa 15 Gew.-%, vorzugsweise 10 Gew.-%, besonders bevorzugt bei 5 Gew.-%.

Die Umsetzung kann gegebenenfalls in Gegenwart eines Katalysators, wie Organozinnverbindungen und/oder tertiären Aminen durchgeführt werden. Um die Reaktionsteilnehmer in flüssigem Zustand zu halten und eine bessere Temperaturkontrolle während der Reaktion zu ermöglichen, ist der Zusatz von organischen Lösemitteln, die keinen aktiven Wasserstoff nach Zerewitinoff enthalten, möglich. Die Menge an Lösemittel kann in weiten Grenzen variieren und sollte zur Bildung einer Präpolymer-Lösung mit geeigneter Viskosität ausreichen. Im allgemeinen werden 10 bis 70 Gew.-% Lösemittel, vorzugsweise 20 bis 50 Gew.-% Lösemittel, bezogen auf den Festkörper eingesetzt.

Die noch vorhandenen Isocyanatgruppen des Präpolymers werden mit einem Modifizierungsmittel umgesetzt. Diese Reaktion führt insbesondere zu einer weiteren Verknüpfung und Erhöhung des Molekulargewichts. Die Menge dieses Modifizerungsmittels wird durch seine Funktionalität und den NCO-Gehalt des Präpolymeren bestimmt. Das Aquivalentverhältnis der aktiven Wasserstoffatome im Modifizierungsmittel zu den NCO-Gruppen im Präpolymer sollte in der Regel geringer als 3:1 sein und vorzugsweise im Bereich zwischen 1:1 und 2:1 liegen.

Bevorzugt werden als Modifizierungsmittel für die Umsetzung mit dem Präpolymer Di-, besonders bevorzugt Tri- und/oder Polyole eingesetzt.

Es können aber auch andere Verbindungen mit aktiven Wasserstoffatomen als Modifizierungsmittel eingesetzt werden, beispielsweise Polyamine, allerdings nur unter der Voraussetzung, daß die Umsetzung des Präpolymers mit dem Modifizierungsmittel in einem organischen Lösemittel durchführbar (kontrollierbar) ist und bei dieser Reaktion keine unerwünschten Reaktionen, wie z. B. die bei Einsatz von Polyaminen häufig beobachtete Gelierung an der Eintropfstelle des Amins, auftreten.
Als Beispiel für mindestens drei Hydroxylgruppen enthaltene Polyole seien Trimethylolpropan, Glycerin, Erythrit, Mesoerythrit, Arabit, Adonit usw. genannt. Bevorzugt wird Trimethylolpropan eingesetzt. Die Umsetzung des Präpolymeren mit den Tri- und/oder Polyolen wird vorzugsweise durch die Stöchiometrie der eingesetzten Verbindungen so gesteuert, daß es zu Kettenverlängerungen kommt.

Die als Bindemittel für die Komponente A eingesetzten Polyacrylatharze sind ebenfalls bekannt und beispielsweise in DE-OS 3832826 beschrieben . Geeignet sind allgemeinen wasserverdünnbare bzw. wasserdispergierbare Polyacrylatharze, die sich in Form organischer Lösungen darstellen lassen.

Als Bindemittel für die Komponente A geeignet sind auch wasserverdünnbare bzw. wasserdispergierbare und in Form organischer Lösungen darstellbare Polyesterharze. Eingesetzt werden beispielsweise entsprechende handelsübliche wasserverdünnbare bzw. wasserdispergierbare Polyesterharze sowie die überlicherweise in Wasserbasislacken eingesetzten Polyesterharze.

Als Bindemittel für die Komponente A sind auch wasserverdünnbare bzw. wasserdispergierbare Aminoplastharze geeignet. Bevorzugt werden wasserverdünnbare Melaminharze eingesetzt. Es handelt sich hierbei im allgemeinen um veretherte Melamin-Formaldehyd-Kondensationsprodukte.
Die Wasserlöslichkeit der Aminoplastharze hängt - abgesehen vom Kondensationsgrad, der möglichst gering sein soll- von der Veretherungskomponente ab, wobei nur die niedrigsten Glieder der Alkohol bzw. Ethylenglykolmonoetherreihe wasserlösliche Kondensate ergeben. Die größte Bedeutung haben die mit Methanol veretherten Melaminharze. Bei Verwendung von Lösungsvermittlern können auch butanolveretherte Melaminharze in wäßriger Phase dispergiert werden. Es besteht auch die Möglichkeit, Carboxylgruppen in das Kondensat einzufügen. Umetherungsprodukte hochveretherter Formaldehydkondensate mit Oxycarbonsäuren sind über ihre Carboxylgruppen nach Neutralisation wasserlöslich und können in den Basisfarben enthalten sein.

Als Bindemittel können in den Basisfarben A selbstverständlich auch Mischungen der genannten Bindemittel eingesetzt werden.

Bevorzugt enthalten die Basisfarben A als Bindemittel wasserverdünnbare Polyurethanharze oder wasserverdünnbare Aminoplastharze oder Mischungen aus wasserverdünnbaren Polyurethanharzen und Aminoplastharzen.

Es ist erfindungswesentlich, daß die Basisfarben A im wesentlichen wasserfrei, bevorzugt völlig wasserfrei sind. Der Wassergehalt der Basisfarben sollte weniger als 5 Gew.-%, bezogen auf das Gesamtgewicht der Basisfarbe, betragen.

Als Lösemittel enthält die Basisfarbe ein oder mehrere organische Lösemittel. Beispiele für geeignete Lösemittel sind insbesondere wasserlösliche bzw. wasserverdünnbare Lösemittel, wie z.B. Alkohole, Ester, Ketone, Ketoester, Glykoletherester u.ä. Bevorzugt eingesetzt werden Alkohole und Glykolether, besonders bevorzugt Butylglykol und Butanole.

Es besteht dabei die Möglichkeit, bereits bei der Herstellung der Bindemittel Lösemittel einzusetzen, die auch später als Lösemittel in der Basisfarbe verbleiben. Häufiger wird jedoch zur Herstellung der Bindemittel ein anderes Lösungsmittel eingesetzt, das nach der Herstellung der Bindemittel durch Vakuumdestillation oder Dünnschichtverdampfung schonend abdestilliert und durch ein Lösemittel ersetzt wird, das in der Bindemittellösung verbleibt, die dann in der Basisfarbe eingesetzt wird. Höhersiedende Lösemittel sollten wasserlöslich sein und verbleiben in der Polyurethanharzlösung, die in der Basisfarbe eingesetzt wird, um das Zusammenfließen der Polymerteilchen während der Filmbildung zu erleichtern.

So erfolgt beispielsweise die Herstellung der Polyurethanharzlösung in einem Keton, wie z. B. Methylethylketon oder Aceton. Nach Zugabe von Buylglykol erfolgt anschließend der Lösemittelaustausch durch destillative Entfernung des Ketons (Methylethylketon, Aceton). Besonders bevorzugt sind als Lösemittel für die Herstellung des Polyurethanharzes Methoxipropylacetat, Ethoxiethylacetat und N-Methylpyrrolin, die nicht ausgetauscht werden müssen (kein aktiver Wasserstoff) und in der Komponente A verbleiben können. Ggf. können diese Lösemittel für die Herstellung der Polyurethanharze auch im Gemisch mit Ketonen eingesetzt werden, wobei die Ketone aber nicht in der Basisfarbe verbleiben, sondern nach Herstellung des Polyurethanharzes ausgetauscht werden.

Die Komponente A kann außerdem noch übliche Hilfs- und Zusatzstoffe enthalten. Beispiele für derartige Additive sind Entschäumer, Dispergierhilfsmittel, Emulgatoren, Verlaufsmittel u.a.

Die Herstellung der Komponente A erfolgt nach dem Fachmann bekannten Methoden durch Mischen und ggf. Dispergieren der einzelnen Komponenten. So erfolgt die Einarbeitung von farbgebenden Pigmenten üblicherweise durch Anreiben (Dispergieren) der jeweiligen Pigmente mit einem oder mehreren der obenbeschriebenen Bindemittel, die bevorzugt in Form ihrer Lösungen in organischen Lösemitteln eingesetzt werden. Ggf. kann zum Anreiben noch weiteres organisches Lösemittel zugesetzt werden. Das Anreiben dieser Pigmente erfolgt mit Hilfe üblicher Vorrichtungen, wie beispielsweise Perlmühlen und Sandmühlen.

Die Einarbeitung der Effektpigmente erfolgt üblicherweise durch homogenes Mischen der Effektpigmente mit einem oder mehreren Lösemitteln. Diese Mischung wird dann in eine Mischung eines oder mehrerer der obenbeschriebenen Bindemittel, ggf. unter Zusatz von weiteren organischen Lösemitteln, mittels eines Rührers oder Dissolvers eingerührt. Die Bindemittel werden bevorzugt in Form ihrer Lösungen in organischen Lösemitteln eingesetzt.

Die jeweiligen Mengenverhältnisse an Pigment, Bindemittel und Lösemittel richten sich dabei, wie dem Fachmann geläufig ist, nach dem Fließverhalten der Pigmentpaste und sind damit abhängig von dem jeweils verwendeten Pigment.

Einen weiteren erfindungswesentlichen Bestandteil des Mischsystems stellt die wasserhaltige Komponente B dar. Denkbar ist der Einsatz einer Komponente B, die nur entionisiertes Wasser enthält und somit nur zur Einstellung der Verarbeitungsviskosität bzw. des Verarbeitungsfestkörpers der Basisfarben dient. Bevorzugt enthält die Komponente B jedoch mindestens ein rheologiesteuerndes Additiv. Ggf. kann die Komponente B noch weitere Hilfs- und Zusatzstoffe, ein oder mehrere wasserverdünnbare bzw. wasserdispergierbare Bindemittel und organische Lösemittel enthalten.

Als rheologiesteuerndes Additiv kommen vernetzte polymere Mikroteilchen, wie sie beispielsweise in der EP-A-38127 offenbart sind, und/oder andere übliche rheologische Additive zum Einsatz. So wirken als Verdicker beispielsweise anorganische Schichtsilikate, wie z.B. Aluminium-Magnesium-Silikate, Natrium-Magnesium-Schichtsilikate und Natrium-Magnesium-Fluor-Lithium-Schichtsilikate des Montmorillonit-Typs sowie synthetische Polymere mit ionischen und/oder assoziativ wirkenden Gruppen, wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder auch hydrophob modifizierte ethoxilierte Urethane oder Polyacrylate. Bevorzugt werden als Verdicker anorganische Schichtsilikate eingesetzt. Besonders bevorzugt ist eine Kombination aus carboxylgruppenhaltigem Polyacrylat-Copolymer mit einer Säurezahl von 60 bis 780, bevorzugt 200 bis 500 mg KOH/g und einem Natrium-Magnesium-Schichtsilikat.

Bevorzugt wird das Natrium-Magnesium-Schichtsilikat in Form einer wäßrigen Paste eingesetzt. Besonders bevorzugte Pasten enthalten entweder 3 Gew.-% Schichtsilikat sowie 3 Gew.-% Polypropylenglykol oder 2 Gew.-% Schichtsilikat und 0,6 Gew.-% Polypropylenglykol oder 2 Gew.-% Schichtsilikat und 2 Gew.-% anderer handelsüblicher oberflächenaktiver Substanzen, wobei alle Prozentangaben auf das Gesamtgewicht der Paste bezogen sind. Diese wäßrigen Pasten des Verdickungsmittels sollten nur der Komponente B und nicht der Komponente A zugesetzt werden.

Für den Einsatz in der Komponente B geeignet sind die bereits bei der Beschreibung der Komponente A aufgeführten wasserverdünnbaren bzw. wasserdispergierbaren Polyurethan-, Polyester- und Aminoplastharze, so daß hier nur auf die Seiten 12 bis 20 der vorliegenden Beschreibung verwiesen wird. Im Unterschied zum Einsatz dieser Harze in der Komponente A können diese Bindemittel beim Einsatz in der Komponente B nicht nur als organische Lösung sondern auch bevorzugt in einer wasserenthaltenden Form eingesetzt werden. Diese Überführung der Harze in die wäßrige Phase erfolgt beispielsweise durch Neutralisation der Trägergruppen (zur Anionen- oder Kationenbildung fähige Gruppen, wie zum Beispiel Carboxylgruppen) und anschließendes Verdünnen mit Wasser, ggf. unter vorheriger teilweiser Entfernung des bei der Herstellung des Harzes eingesetzten organischen Lösemittels oder durch direkten Aufbau des Harzes in Gegenwart von Wasser. Wegen weiterer Einzelheiten sei auf die Literatur verwiesen, in denen die Herstellung der Harze beschrieben ist (vgl. z.B. DE-OS 3210051, DE-OS 2624442, DE-OS 3739332, US-PS 4,719,132, EP-A-89497, US-PS 4,558,090, US-PS 4,489,135, EP-A-38127, DE-OS3628124, EP-A-158099, DE-OS2926584, EP-A-195931 und DE-OS3321180).

Ferner sind als Bindemittel für die Komponente B auch wasserverdünnbare bzw. wasserdispergierbare Polyurethanharze geeignet, die sich nicht in Form organischer Lösungen darstellen lassen. Dabei handelt es sich insbesondere um Polyurethanharze, bei denen das NCO-gruppenhaltige Präpolymer mit einem Polyamin als Modifizierungsmittel umgesetzt wurde.

Die Herstellung dieser Polyurethanharze erfolgt üblicherweise derart, daß das auf den Seiten 12 bis 18 der vorliegenden Anmeldung beschriebene NCO-Präpolymer zunächst wasserverdünnbar bzw. wasserdispergierbar gemacht wird. Hierzu werden beispielsweise die anionischen Gruppen des NCO-Präpolymeren mit einem tertiären Amin mindestens teilweise neutralisiert.

Die dadurch geschaffene Zunahme der Dispergierbarkeit in Wasser reicht für eine unendliche Verdünnbarkeit aus. Sie reicht auch aus, um das neutralisierte Polyurethan beständig zu dispergieren. Die noch vorhandenen Isocyanatgruppen werden mit dem Modifizierungsmittel umgesetzt. Diese Reaktion führt zu einer weiteren Verknüpfung und Erhöhung des Molekulargewichts. Als Modifizierungsmittel werden wasserlösliche Verbindungen bevorzugt, weil sie die Dispergierbarkeit des polymeren Endproduktes in Wasser erhöhen. Geeignet sind organische Diamine, weil sie in der Regel die höchste Molmasse aufbauen, ohne das Harz zu gelieren. Voraussetzung hierfür ist jedoch, daß das Präpolymer vor der Kettenverlängerung in Wasser dispergiert wird oder in anderer ausreichender Verdünnung vorliegt. Die Menge des Modifizierungsmittels wird von seiner Funktionalität und vom NCO-Gehalt des Pröpolymeren bestimmt.

Die Anwesenheit von überschüssigem aktiven Wasserstoff, insbesondere in Form von primären Aminogruppen, kann zu Polymeren mit unerwünscht niedriger Molmasse führen. Die Kettenverlängerung kann wenigstens teilweise mit einem Polyamin erfolgen, das mindestens drei Aminogruppen mit einem reaktionsfähigen Wasserstoff aufweist. Dieser Polyamin-Typ kann in einer solchen Menge eingesetzt werden, daß nach der Verlängerung des Polymers nicht umgesetzte Aminstickstoffatome mit 1 oder 2 reaktionsfähigen Wasserstoffatomen vorliegen. Solche brauchbaren Polyamine sind Diethylentriamin, Triethylentetramin, Dipropylentriamin und Dibutylentriamin. Bevorzugte Polyamine sind die Alkyl- oder Cycloalkyltriamine, wie Diethylentriamin. Um ein Gelieren bei der Kettenverlängerung zu verhindern, können auch kleine Anteile von Monoaminen, wie Ethylhexylamin zugesetzt werden.

Die Komponente B kann außerdem ggf. noch ein oder mehrere organische Lösemittel sowie ggf. noch weitere übliche Hilfs- und Zusatzstoffe enthalten. Beispiele für geeignete organische Lösemittel sind die bereits bei der Beschreibung der Komponente A aufgeführten Lösemittel. Der Gehalt an organischem Lösemitteln beträgt überlicherweise 0 bis 3 Gew.- %. bezogen auf das Gesamtgewicht der Komponente B. Beispiele für geeignete Hilfs- und Zusatzstoffe sind ebenfalls die bei der Beschreibung der Komponente A genannten Additive. Die Einsatzmenge dieser Additive beträgt üblicherweise 0 bis 10 Gew.-%, bezogen auf das Gesamtgewicht der Komponente B.

Für die Komponente B Bindemittel, werden als Bindemittel wasserverdünnbare bzw. wasserdispergierbare Polyurethanharze und/oder Aminoplastharze und/oder Polyesterharze eingesetzt.

Das erfindungsgemäße Verfahren zur Herstellung wäßriger Überzugsmittel mit genau festgelegter Tönung wird mit verschiedenen pigmenthaltigen Basisfarben (Komponente A) und mindestens einer wasserenthaltenden Komponente B durchgeführt. Je nach gewünschtem Farbton des wäßrigen Überzugsmittels werden dann zur Herstellung des wäßrigen Überzugsmittels eine oder mehrere Basisfarben mit mindestens einer wasserenthaltenden Komponente B direkt vor der Applikation des wäßrigen Überzugsmittels gemischt. Typischerweise werden 15 bis 60, bevorzugt 20 bis 40, verschiedene Basisfarben und 1 bis 5, bevorzugt 1 bis 3, verschiedene Komponenten B eingesetzt.
Bezüglich der Beschreibung üblicher Mischmaschinen für die Bevorratung und Lagerung der Basisfarben und Mischungen wird nur auf die Literatur verwiesen, wie z.B. das Glasurit-Handbuch, 11. Auflage, Kurt R., Vincentz-Verlag, Hannover 1984, Seiten 544 bis 547.

Bevorzugt werden als Komponente A Basisfaben eingesetzt, die außerdem noch 0 bis 10 Gew.-%, bezogen auf das Gesamtgewicht der Komponente A, übliche Hilfs- und Zusatzstoffe enthalten. Besonders bevorzugt werden Basisfarben, die nur Effektpigmente enthalten und Basisfarben, die nur farbgebende Pigmente enthalten, eingesetzt.

Besonders bevorzugte Basisfarben (Komponente A) auf der Basis von Effektpigmenten enthalten
Aa) 0,5 bis 50 Gew.-% mindestens eines Effektpigments,
Ab) 20 bis 80 Gew.-% mindestens eines wasserverdünnbaren oder wasserdispergierbaren Bindemittels und
Ac) mindestens ein organisches Lösemittel, wobei die Summe der Gewichtsanteile der Komponenten Aa bis Ac jeweils 100 Gew.-% beträgt.

Besonders bevorzugte Basisfarben (Komponente A) auf der Basis anorganischer farbgebender Pigmente enthalten
Aa) 1 bis 70 Gew.-% mindestens eines anorganischen farbgebenden Pigments,
Ab) 10 bis 80 Gew.-% mindestens eines wasserverdünnbaren oder wasserdispergierbaren Bindemittels und
Ac) mindestens ein organisches Lösemittel, wobei die Summe der Gewichtsanteile der Komponenten Aa bis Ac jeweils 100 Gew.-% beträgt.

Besonders bevorzugte Basisfarben (Komponente A) auf der Basis organischer farbgebender Pigmente enthalten
Aa) 1 bis 30 Gew.-% mindestens eines organischen farbgebenden Pigments,
Ab) 10 bis 80 Gew.-% mindestens eines wasserverdünnbaren oder wasserdispergierbaren Bindemittels und
Ac) mindestens ein organisches Lösemittel, wobei die Summe der Gewichtsanteile der Komponenten Aa bis Ac jeweils 100 Gew.-% beträgt.

Selbstverständlich können auch Basisfarben als Komponente A eingesetzt werden, die eine Kombination aus mindestens einem organischen farbgebenden und mindestens einem anorganischen farbgebenden Pigment enthalten.

Als Komponente B werden bevorzugt Mischungen eingesetzt, die
Ba) 80 bis 97 Gew.%, Wasser,
Bb) 2 bis 5 Gew.-%, mindestens eines rheologiesteuernden Additives, wobei diese Menge auf das Gewicht des reinen Additivs ohne Lösemittelanteil bezogen ist und
Bc) mindestens ein wasserverdünnbares oder wasserdispergierbares Polyurethanharz und/oder Aminoplastharz und/oder Polyesterharz
enthalten, wobei die Summe der Gewichtsanteile der Komponenten Ba bis Bc jeweils 100 Gew.-% beträgt.

Die verschiedenen Basisfarben A werden zur Herstellung der wäßrigen Überzugsmittel in einem solchen Verhältnis gemischt, daß der gewünschte Farbton resultiert. Das Mischungsverhältnis der Komponente A mit der oder den verschiedenen Komponenten B wird durch die Forderung bestimmt, daß das resultierende Überzugsmittel unabhängig vom Farbton die gewünschte Viskosität, den gewünschten Festkörpergehalt und den gewünschten Gehalt an organischen Lösemitteln usw. aufweist.

Der Festkörpergehalt (Menge an eingesetztem festen Bindemittel plus Menge an eingesetztem Pigment) sowie der Gehalt an organischem Lösemittel u.ä. variiert mit dem Verwendungszweck der wäßrigen Überzugsmittel. Im Bereich der Autoreparaturlacke liegt der Festkörpergehalt für Metalliclacke bevorzugt bei 7 bis 25 Gew.-% und für unifarbige Lacke bevorzugt bei 10 bis 45 Gew.-%, jeweils bezogen auf das Gesamtgewicht der wäßrigen Überzugsmittel.

Eine bevorzugte Ausführungsform des erfindungsgemäßen Verfahrens ist, daß alle Basisfarben das gleiche bzw. im Falle einer Bindemittelmischung die gleichen Bindemittel enthalten. Besonders bevorzugt weisen alle Basisfarben das gleiche Verhältnis der Menge an eingesetztem festen Bindemittel (d.h. ohne Lösemittel) zu der Menge an eingesetztem organischen Lösemittel auf Dies gewährleistet, daß-unabhängig vom gewünschten Farbton und somit unabhängig vom Mischungsverhältnis der verschiedenen Basisfarben - die resultierende Mischung der verschiedenen Basisfarben stets das gleiche Bindemittel:Lösemittel-Verhältnis hat und damit unabhängig vom Farbton ein etwa gleichbleibendes Abdunstverhalten (Trocknung) sowie eine ähnliche Rheologie zeigt. Dieses konstante Bindemittel:Lösemittel-Verhältnis in allen Basisfarben gewährleistet außerdem, daß auch ggf. das Verhältnis Bindemittel (gelöst):Bindemittel (dispergiert) im fertigen wäßrigen Lack konstant ist, sofern die Komponente B, wie es erfindungsgemäß gefordert ist, Bindemittel enthält.
Der Einsatz von verschiedenen Basisfarben mit jeweils identischem Bindemittel:Lösungsmittel-Verhältnis weist den praktischen Vorteil auf, daß unabhängig vom jeweils gewünschten Farbton konstante Filmeigenschaften erzielt werden.

Wird in den Basisfarben jeweils eine Mischung verschiedener Bindemittel eingesetzt, so sollte auch das Mischungsverhältnis der verschiedenen Bindemittel untereinander in den einzelnen Basisfarben bevorzugt jeweils konstant sein, um so nach Mischung mit der Komponente B wiederum konstante Mischungsverhältnisse hinsichtlich der Bindemittel unabhängig vom Farbton zu erzielen. Wird in der Komponente B eine Mischung der Bindemittel eingesetzt, die auch in der Komponente A verwendet werden, so sollte auch in der Komponente B das Mischungsverhältnis der verschiedenen Bindemittel untereinander bevorzugt gleich dem Mischungsverhältnis dieser Bindemittel in der Komponente A sein.

Besonders bevorzugt ist, daß die Basisfarben A als Bindemittel wasserverdünnbare Polyurethanharze und ggf. Aminoplastharz und die Komponente B als Bindemittel Polyurethanharzdispersionen enthält. Die unter Verwendung des erfindungsgemäßen Verfahrens hergestellten wäßrigen Überzugsmittel können auf die verschiedensten Substrate, wie z. B. Metall, Holz, Kunststoff oder Papier aufgebracht werden. Sollen die unter Verwendung des erfindungsgemäßen Verfahrens hergestellten wäßrigen Überzugsmittel auf Kunststoff aufgebracht werden, so ist es bevorzugt, daß sowohl die Basisfarben A als auch die Komponente B kein Aminoplastharz enthalten. Insbesondere werden in diesem Fall Basisfarben A, die als Bindemittel wasserverdünnbare Polyurethanharze und kein Aminoplastharz enthalten, eingesetzt.

Die mittels des erfindungsgemäßen Verfahrens hergestellten wäßrigen Überzugsmittel eignen sich beispielsweise auch für die Serienlackierung von Automobilen. Insbesondere eignen sich diese wäßrigen Überzugsmittel für die Reparaturlackierung von Schadstellen, insbesondere für die Autoreparaturlackierung. Die Überzugsmittel werden in diesem Fall direkt nach ihrer Herstellung durch Mischen der Komponenten A und B auf die entsprechend vorbereitete Schadstelle (z. B. durch Spachteln und Füllern) mittels üblicher Methoden, insbesondere Spritzen, aufgebracht. Bevorzugt werden die unter Verwendung des erfindungsgemäßen Verfahrens hergestellten wäßrigen Überzugsmittel zur Erzeugung einer Basisschicht eingesetzt.

Nach Antrocknung der so hergestellten Basisschicht bei Raumtemperatur oder durch forcierte Trocknung (z. B. 10 min. bei 60 °C, 80 °C oder IR-Trocknung) wird eine geeignete transparente Deckbeschichtungszusammensetzung aufgebracht. Als Decklack geeignet sind sowohl organisch gelöste als auch wäßrige 1- oder 2-Komponenten-Klarlacke sowie Pulverklarlacke. Häufig eingesetzt werden 2-Komponenten-Klarlacke auf Basis eines hydroxylgruppenhaltigen Acrylatcopolymerisates und eines Polyisocyanates. Derartige Klarlacke sind beispielsweise in den Patentanmeldungen DE 34 12 534, DE 36 09 519, DE 37 31 652 und DE 38 23 005 beschrieben. Geeignete l-Komponenten-Klarlacke, beispielsweise auf Basis eines hydroxylgruppenhaltigen Bindemittels und eines Aminoharzhärters sind ebenfalls bekannt und beispielsweise im Kittel, Lehrbuch der Lacke und Beschichtungen, Band IV; Verlag W.A. Colomb in der H. Heeremann GmbH, Berlin-Oberschwandorf 1976 beschrieben. Selbstverständlich sind aber auch alle anderen, hier nicht explizit genannten Klarlacke geeignet.

Nach einer ggf. erforderlichen Ablüftzeit von etwa 5 Minuten wird dann die Basisschicht zusammen mit der Deckschicht getrocknet. Bei Verwendung von 2-Komponenten-Klarlacken erfolgt die Trocknung i.a. bei Temperaturen von unter 100 °C, bevorzugt von unter 80 °C. Die Trockenfilmschichtdicken der Basisschicht liegen i. a. zwischen 5 und 25 µm, die der Deckschicht i.a. zwischen 30 und 70 µm.

Bei Verwendung von l-Komponenten-Klarlacken wird die Basisschicht zusammen mit der Deckschicht bei erhöhten Temperaturen, z.B. ca. 120°C, getrocknet. Die Trockenfilmschichtdicken der Deckschicht liegen hier i.a. zwischen 30 und 50 µm.

Im folgenden wird die Erfindung anhand von Ausführungsbeispielen näher erläutert. Alle Angaben über Teile und Prozente stellen dabei Gewichtsangaben dar, falls nicht ausdrücklich etwas anderes vermerkt ist.

### 1. Herstellung der Bindemittel für die Komponenten A und B

### 1.1 Herstellung eines Polyurethanharzes 1 für die Komponente A

In einem geeigneten Reaktionsgefäß mit Rührer, Rückflußkühler und Zulaufgefäß werden unter Schutzgas 686,3 g eines Polyesters mit einem zahlenmittleren Molekulargewicht von 1400 auf Basis einer handelsüblichen ungesättigten Dimerfettsäure (mit einer Jodzahl von 10 mg J₂/g, einem Monomerengehalt von maximal 0,1 %, einem Trimergehalt von maximal 2 %, einer Säurezahl von 195 bis 200 mgKOH/g und einer Verseifungszahl von 197 bis 202 mgKOH/g), Isophthalsäure und Hexandiol vorgelegt und nacheinander mit 10,8 g Hexandiol, 55,9 g Dimethylolpropionsäure, 344,9 g Methylethylketon und 303,6 g 4,4'-Di-(isocyanatocyclohexyl)methan versetzt. Diese Mischung wird so lange unter Rückfluß gehalten, bis der Isocyanatgehalt auf 1,0 % abgesunken ist. Anschließend werden dem Gemisch 26,7 g Trimethylolpropan zugegeben und bis zu einer Viskosität von 12 dPas (bei einer Anlösung von 1:1 = Harzlösung-N-Methylpyrrolidon) unter Rückfluß gehalten. Dann werden 1378,7 g Butylglykol zugegeben. Nach einer Vakuumdestillation, in der das Methylethylketon entfernt wird, wird die Harzlösung mit 32,7 g Dimethylethanolamin neutralisiert. Der Feststoffgehalt der resultierenden Harzlösung beträgt 44 %.

Die erhaltene Masse wird unter intensivem Rühren mit Butylglykol auf einen Festkörper von 41 Gew.-% verdünnt.

### 1.2 Herstellung einer Polyurethanharzdispersion 3 für die Komponente B

In einem geeigneten Reaktionsgefäß mit Rührer, Rückflußkühler und Zulaufgefäß werden unter Schutzgas 686,3 g eines Polyesters mit einem zahlenmittleren Molekulargewicht von 1400 auf Basis einer handelsüblichen ungesättigten Dimerfettsäure (mit einer Jodzahl von 10 mgJ₂/g, einem Monomergehalt von maximal 0,1 %, einem Trimergehalt von maximal 2 %, einer Säurezahl von 195 bis 200 mgKOH/g und einer Verseifungszahl von 197 bis 202 mgKOH/g), Isophthalsäure und Hexandiol vorgelegt und nacheinander mit 10,8 g Hexandiol, 55,9 g Dimethylolpropionsäure, 344,9 g Methylethylketon und 303,6 4,4'-Di-(isocyanatocyclohexyl)methan versetzt. Diese Mischung wird so lange unter Rückfluß gehalten, bis der Isocyanatgehalt auf 1,0 % abgesunken ist. Anschließend werden dem Gemisch 26,7 g Trimethylolpropan zugegeben und bis zu einer Viskosität von 12 dPas dPas (bei einer Anlösung von 1:1 = Harzlösung/N-Methylpyrrolidon) unter Rückfluß gehalten. Durch Zugabe von 47,7 g Butylglykol wird eventuell vorhandenes überschüssiges Isocyanat vernichtet. Anschließend werden dem Reaktionsgemisch 32,7 g Dimethylethanolamin, 2688,3 g entionisiertes Wasser und 193,0 g Butylglykol unter starkem Rühren zugegeben. Nach dem Entfernen des Methylethylketons mittels Vakuumdestiallation erhält man eine Dispersion mit einem Feststoffgehalt von ca. 27 %.

### 2. Herstellung verschiedener Basisfarben A

Im folgenden wird das erfindungsgemäße Mischsystem beispielhaft anhand der Herstellung verschiedener blauer Metalliclacke erläutert. Selbstverständlich sind zur Herstellung anderer Farbtöne anders pigmentierte Basisfarben A1-X bis A4-X erforderlich.

Die Herstellung der Basisfarben A1-X bis A4-X erfolgt für effektgebende Pigmente in gleicher Weise wie im folgenden für A1-1 bis A4-1 für ein Aluminiumpigment beschrieben wird und für nichteffektgebende Pigmente in gleicher Weise wie im folgenden für A1-2 bis A4-2 für ein Blaupigment beschrieben wird, jedoch jeweils unter Verwendung anderer geeigneter Pigmente, wobei die Mengenverhältnisse der Bindemittel zu den Lösemitteln und ggf. die Mengenverhältnisse der Bindemittel untereinander jeweils konstant sind und denen bei den unten beschriebenen Verfahren A1 bis A4 entsprechen. Die Pigmentierungshöhe wird - wie dem Fachmann bekannt - durch das Fließverhalten bestimmt.

### 2.1 Herstellung einer Aluminium enthaltenden Basis-farbe A1-1

27 Teile einer gemäß DE-OS 3 636 183 chromatierten Aluminiumbronze (Aluminiumgehalt 65 %, durchschnittlicher Teilchendurchmesser 15 µm) werden in 27 Teilen Butylglykol durch 15 minütiges Rühren homogen verteilt und anschließend in eine Mischung aus 10 Teilen Butylglykol und 36 Teilen eines handelsüblichen, methylveretherten Melaminharzes (75 %ig in iso-Butanol) unter Rühren einfließen gelassen. Diese Mischung wird weitere 30 Minuten mit einem Schnellrührer bei 1000 U/min gerührt.

### 2.2 Herstellung einer Aluminium enthaltenden Basis-farbe A2-1:

15,5 Teile einer gemäß DE-OS 3 636 183 chromatierten Aluminiumbronze (Aluminiumgehalt 65 %, durchschnittlicher Teilchendurchmesser 15 µm) werden in 14 Teilen Butylglykol durch 15 minütiges Rühren homogen verteilt und anschließend in eine Mischung aus 51 Teilen der 41 %igen, neutralisierten Polyurethanharzlösung 1, 19,5 Teilen eines handelsüblichen, methylveretherten Melaminharzes (75 %ig in iso-Butanol) und 10 Teilen Butylglykol unter Rühren einfließen gelassen. Diese Mischung wird weitere 30 Minuten mit einem Schnellrührer bei 1000 U/min gerührt.

### 2.3 Herstellung einer Aluminium enthaltenden Basis-farbe A3-1:

20 Teile einer gemäß DE-OS 3 636 183 chromatierten Aluminiumbronze (Aluminiumgehalt 65 %, durchschnittlicher Teilchendurchmesser 15 µm) werden in 9 Teilen Butylglykol und 7 Teilen iso-Butanol durch 15 minütiges Rühren homogen verteilt und anschließend in 64 Teile der 41 %igen, neutralisierten Polyurethanharzlösung 1 unter Rühren einfließen gelassen. Diese Mischung wird weitere 30 Minuten mit einem Schnellrührer bei 1000 U/min. gerührt.

### 2.4 Herstellung einer Aluminium enthaltenden Basis-farbe A4-1:

17,5 Teile einer gemäß DE-OS 3 636 183 chromatierten Aluminiumbronze (Aluminiumgehalt 65 %, durchschnittlicher Teilchendurchmesser 15 µm) werden in 16 Teilen Butylglykol durch 15 minütiges Rühren homogen verteilt und anschließend in eine Mischung aus 56,5 Teilen der 41 %igen, neutralisierten Polyurethanharzlösung 1 und 10 Teilen eines handelsüblichen, methylveretherten Melaminharzes (75-ig in iso-Butanol) unter Rühren einfließen gelassen. Diese Mischung wird weitere 30 Minuten mit einem Schnellrührer bei 1000 U/min gerührt.

### 2.5 Herstellung einer Aluminium enthaltenden Basis-farbe A5-1

Es wird analog zur Herstellung der Basisfarbe A3-1 eine Basisfarbe A5-1 hergestellt, mit dem einzigen Unterschied, daß nun als Aluminiumpigment das handelsübliche Aluminiumpigment Alu Stapa PP Chromal X/80 der Fa. Eckart, Fürth, eingesetzt wird.

### 2.6 Herstellung einer Aluminium enthaltenden Basis-farbe A6-1 (Vergleich analog EP-A-320552):

Analog der Verfahrensvorschrift des Beispiels der EP-A-320552 werden 36 Teile einer gemäß DE-OS 3 636 183 chromatierten Aluminiumbronze (Aluminiumgehalt 65 %, durchschnittlicher Teilchendurchmesser 15 µm) in 60 Teilen Butylglykol und 4 Teilen Polypropylenglykol durch 15 minütiges Rühren bei 1000 U/min homogen verteilt.

### 2.7 Herstellung einer Aluminium enthaltenden Basis-farbe A7-1 (Vergleich analog DE-OS 3915459):

36 Teile einer gemäß DE-OS 3 636 183 chromatierten Aluminiumbronze (Aluminiumgehalt 65 %, durchschnittlicher Teilchendurchmesser 15 µm) werden in 64 Teilen Butylglykol durch 15 minütiges Rühren bei 1000 U/min. homogen verteilt.

### 2.8 Herstellung einer Aluminium enthaltenden Basis-farbe A8-1 (Vergleich zu Basisfarbe A5-1):

Analog der Verfahrensvorschrift des Beispiels 1 der EP-A 297576 werden 17 Teile einer handelsüblichen Aluminiumbronze (Alu-Stapa PP Chromal X/80, der Fa. Eckart, Fürth; Aluminiumgehalt 80 %, durchschnittlicher Teilchendurchmesser 15 µm) in 7,5 Teilen Butylglykol und 5,5 Teilen iso-Butanol durch 15 minütiges Rühren homogen verteilt, anschließend in 54 Teile der 41-%igen, neutralisierten Polyurethanharzlösung 1 einfließen gelassen und mit 16 Teilen entionisiertem Wasser verdünnt. Diese Mischung wird weitere 30 Minuten mit einem Schnellrührer bei 1000 U/min. gerührt.

### 2.9 Herstellung einer blaupigmentierten Basis-farbe A1-2:

10 Teile Paliogenblau, 45 Teile eines handelsüblichen, methylveretherten Melaminharzes (75 %-ig in iso-Butanol) und 45 Teile Butylglykol werden unter Rührer vermischt und mit einer Sandmühle dispergiert.

### 2.10. Herstellung einer blaupigmentierten Basis-farbe A2-2:

7 Teile Paliogenblau, 57 der 41%igen, neutralisierten Polyurethanharzlösung 1, 15 Teile Butylglykol und 21 Teile eines handelsüblichen, methylveretherten Melaminharzes (75%igen in iso-Butanol) werden unter Rühren vermischt und mit einer Sandmühle dispergiert.

### 2.11. Herstellung einer blaupigmentierten Basis-farbe A3-2:

8 Teile Paliogenblau, 73,5 Teile der 41-%igen, neutralisierten Polyurethanharzlösung 1, 10,5 Teile Butylglykol und 8 Teile iso-Butanol werden unter Rühren vermischt und mit einer Sandmühle dispergiert.

### 2.12. Herstellung einer blaupigmentierten Basis-farbe A4-2:

7,5 Teile Paliogenblau, 64 Teile der 41-%igen, neutralisierten Polyurethanharzlösung 1, 11,5 Teile eines handelsüblichen, methylveretherten Melaminharzes (75 %ig in iso-Butanol) und 17 Teile Butylglykol werden unter Rühren vermischt und mit einer Sandmühle dispergiert.

### 2.13. Herstellung einer blaupigmentierten Basis-farbe A5-2 (Vergleich zu Basisfarbe A2-2):

5,8 Teile Paliogenblau, 46,7 Teile der 41%igen, neutralisierten Polyurethanharzlösung 1, 17,8 Teile eines handelsüblichen, methylveretherten Melaminharzes (75 %ig in iso-Butanol) und 29,7 Teile entionisiertes Wasser werden unter Rühren vermischt und mit einer Sandmühle dispergiert.

### 3. Herstellung der pigmentfreien Komponente B:

### 3.1 Herstellung einer Mischung B1, mindestens eine Sekundärdispersion enthaltend:

Zu 44 Teilen Polyurethanharzdispersion 3 werden 43 Teile einer vorgequollenen wäßrigen Paste, enthaltend 3 Gew.-% eines anorganischen Natrium-Magnesium-Schichtsilikat-Verdickungsmittels und 3 Gew.-% Polypropylenglykol mit einem zahlenmittleren Molekulargewicht von 900, wobei die Prozente auf das Gesamtgewicht der Paste bezogen sind, 9 Teile entionisiertes Wasser, 0,5 Teile eines handelsüblichen Entschäumers und 3,5 Teile einer 3,5%igen Lösung eines handelsüblichen Polyacrylatverdickers in Wasser unter Rühren zugesetzt.

### 3.2 Herstellung einer Mischung B2, mindestens eine Sekundärdispersion enthaltend:

Zu 27 Teilen Polyuethanharzdispersion 3 werden 54 Teile einer vorgequollenen wäßrigen Paste, enthaltend 3 Gew.-% eines anorganischen Natrium-Magnesium-Schichtsilikat-Verdickungsmittels und 3 Gew.-% Polypropylenglykol mit einem zahlenmittleren Molekulargewicht von 900, wobei die Prozente auf das Gesamtgewicht der Paste bezogen sind, 17,5 Teile entionisiertes Wasser, 0,3 Teile eines handelsüblichen Entschäumers, 0,3 Teile einer 3,5 %igen Lösung eines handelsüblichen Polyacrylatverdickers in Wasser und 0,9 Teile Butylglykol unter Rühren zugesetzt.

### 3.3 Herstellung einer Mischung B3, mindestens eine Sekundärdispersion enthaltend:

Zu 39 Teilen Polyurethanharzdispersion 3 werden 46,5 Teile einer vorgequollenen wäßrigen Paste, enthaltend 3 Gew.-% eines anorganisches Natrium-Magnesium-Schichtsilikat-Verdickungsmittels und 3 Gew.-% Polypropylenglykol mit einem zahlenmittleren Molekulargewicht von 900, wobei die Prozente auf das Gesamtgewicht der Paste bezogen sind, 13 Teile entionisiertes Wasser, 0,3 Teile eines handelsüblichen Entschäumers, 0,7 Teile einer 3,5 %igen Lösung eines handelsüblichen Polyacrylatverdickers in Wasser und 0,5 Teile Butylglykol unter Rühren zugesetzt.

### 3.4 Herstellung einer Mischung B4, mindestens eine Sekundärdispersion enthaltend:

Zu 24 Teilen Polyurethanharzdispersion 3 und 3 Teilen eines handelsüblichen, methylveretherten Melaminharzes (75 %ig in iso-Butanol) werden 47,5 Teile einer vorgequollenen wäßrigen Paste, enthaltend 3 Gew.-% eines anorganischen Natrium-Magnesium-Schichtsilikat-Verdickungsmittels und 3 Gew.-% Polypropylenglykol mit einem zahlenmittleren Molekulargewicht von 900, wobei die Prozente auf das Gesamtgewicht der Paste bezogen sind, 23,5 Teile entionisiertes Wasser, 1 Teil Butylglykol und 1 Teil einer 3,5 %igen Lösung eines handelsüblichen Polyacrylatverdickers in Wasser unter Rühren zugesetzt.

### Beispiele 1 bis 30

Aus den Komponenten A und Komponenten B wurden die wäßrigen Basisbeschichtungszusammensetzungen 1 - 30 hergestellt (wie in den Tabellen 1 - 7 beschrieben), indem die jeweilige(n) Basisfarbe(n) A direkt nach ihrer Herstellung in die jeweilige Mischung B eingerührt wurden. Anschließend wurde die Viskosität durch Zugabe von entionisiertem Wasser auf eine Auslaufzeit von 20 s im DIN-4-Becher (bei 20°C) eingestellt.

In einer zweiten Versuchsreihe erfolgte das Zusammengeben der einzelnen Komponenten zur Prüfung der Lagerstabilität nach einer getrennten Lagerung der einzelnen Komponenten während einer Zeit von 6 Monaten bei Raumtemperatur bzw. 3 Monaten bei 40°C.

Direkt im Anschluß nach der Herstellung der wäßrigen Basisbeschichtungszusammensetzungen wurden sie nach gut bekannten Methoden auf mit einer handelsüblichen Elektrotauchlackierung und einem konventionellen (d.h. lösemittelhaltigen) oder wasserhaltigen Füller beschichtete phosphatierte Stahlbleche (Bonder 132) gespritzt, nach einer Ablüftzeit von 30 Minuten bei Raumtemperatur (bei einer relativen Luftfeuchtigkeit von 50 % und einer Raumtemperatur von 20°C) mit einem handelsüblichen konventionellen 2-Komponenten-Klarlack auf Basis eines hydroxylgruppenhaltigen Acrylatcopolymerisates und eines Isocyanatvernetzers überlackiert und 30 Minuten bei 60°C getrocknet. Die Trockenfilmschichtdicke der Basisbeschichtungszusammensetzung beträgt ≈15 µm, die des Klarlackes ≈50 µm.

**Tabelle 1:**

| Zusammensetzung der wäßrigen Basisbeschichtungen 1 bis 5 in Teilen | | | | | |
|---|---|---|---|---|---|
| Beispiel | 1 | 2 | 3 | 4 | 5 |
| A1-1 | 13,- | 9,7 | 8,7 | 6,5 | 4,3 |
| A1-2 | - | 2,7 | 3,6 | 5,3 | 7,1 |
| B1 | 87,- | 87,6 | 87,7 | 88,2 | 88,6 |
| | 100,- | 100,- | 100,- | 100,- | 100,- |

Die Menge der Komponente B1 ergibt sich aus der Forderung, daß das Verhältnis der Menge der Komponenten B1 zu der Menge an Melaminharz aus den Komponenten A1-1 plus A1-2 in der Beschichtung konstant ist. Analog ergibt sich die Menge an B1 bei Verwendung anderer Komponenten A1-X.

**Tabelle 2:**

| Zusammensetzung der wäßrigen Basisbeschichtungen 6 bis 10 in Teilen | | | | | |
|---|---|---|---|---|---|
| Beispiel | 6 | 7 | 8 | 9 | 10 |
| A2-1 | 26,- | 19,5 | 17,3 | 13,- | 8,7 |
| A2-2 | - | 6,- | 8,- | 12,- | 16,1 |
| B2 | 74,- | 74,5 | 74,7 | 75,- | 75,2 |
| | 100,- | 100,- | 100,- | 100,- | 100,- |

Die Menge der Komponente B2 ergibt sich aus der Forderung, daß das Verhältnis der Menge der Komponente B2 zu der Menge an Melaminharz und/oder Polyurethanharz aus den Komponenten A2-1 plus A2-2 in der Beschichtung konstant ist. Analog ergibt sich die Menge an B2 bei Verwendung anderer Komponenten A2-X.

**Tabelle 3:**

| Zusammensetzung der wäßrigen Basisbeschichtungen 11 bis 15 in Teilen | | | | | |
|---|---|---|---|---|---|
| Beispiel | 11 | 12 | 13 | 14 | 15 |
| A3-1 | 19,- | 14,25 | 12,7 | 9,5 | 6,3 |
| A3-2 | - | 4,25 | 5,7 | 8,5 | 11,3 |
| B3 | 81,- | 81,5 | 81,6 | 82,- | 82,4 |
| | 100,- | 100,- | 100,- | 100,- | 100,- |

Die Menge der Komponente B3 ergibt sich aus der Forderung, daß das Verhältnis der Menge der Komponente B3 zu der Menge an Polyurethanharz aus den Komponenten A3-1 plus A3-2 in der Beschichtung konstant ist. Analog ergibt sich die Menge an B3 bei Verwendung anderer Komponenten A3-X.

**Tabelle 4:**

| Zusammensetzung der wäßrigen Basisbeschichtungen 16 bis 20 in Teilen | | | | | |
|---|---|---|---|---|---|
| Beispiel | 16 | 17 | 18 | 19 | 20 |
| A4-1 | 23,- | 18,- | 16,- | 12,- | 8,- |
| A4-2 | - | 5,- | 7,- | 11,- | 15,- |
| B4 | 77,- | 77,- | 77,- | 77,- | 77,- |
| | 100,- | 100,- | 100,- | 100,- | 100,- |

Die Menge der Komponente B4 ergibt sich aus der Verarbeitbarkeit der Basisbeschichtungszusammensetzung. Da die Mengenverhältnisse der Festharze Polyurethan-/Melaminharz in allen Komponenten A4-X und B4 konstant sind, sind diese Mengenverhältnisse auch in allen Mischungen konstant. In den Beispielen 16 bis 20 ist im Unterschied zu den übrigen Beispielen 1 bis 15 und 21 bis 30 eine geringe farbtonabhängige Variation im Bindemittel- zu Lösemittelverhältnis vorhanden.

**Tabelle 5:**

| Zusammensetzung der wäßrigen Basisbeschichtungen 21 bis 25 in Teilen | | | | | |
|---|---|---|---|---|---|
| Beispiel | 21 | 22 | 23 | 24 | 25 |
| A5-1 | 19,- | 14,25 | 12,7 | 9,5 | 6,3 |
| A3-2 | - | 4,25 | 5,7 | 8,5 | 11,3 |
| B3 | 81,- | 81,5 | 81,6 | 82,- | 82,4 |
| | 100,- | 100,- | 100,- | 100,- | 100,- |

Die Menge der Komponente B3 ergibt sich aus der Forderung, daß das Verhältnis der Menge der Komponente B3 zu der Menge an Polyurethanharz und/oder Melaminharz aus den Komponenten A5-1 plus A3-2 in der Beschichtung konstant ist.

### Vergleichsbeispiele V1 - 5:

Die Zusammensetzungen V1 - 5 entsprechen denen der in Tabelle 2 beschriebenen Beispiele 6 - 10, als pigmentierte Komponente wurde aber A5-2 anstelle von A2-2 verwendet.

### Vergleichsbeispiele V6-7:

Die Zusammensetzungen V6-7 entsprechen der des Beispiels 1 aus Tabelle 1. Als Aluminium enthaltende Komponenten wurde A6-1 und A7-1 anstelle von A1-1 verwendet.

### Vergleichsbeispiel V8:

Die Zusammensetzung V8 entspricht der des Beispiels 26 aus Tabelle 6. Als aluminiumenthaltende Komponente wurde A8-1 anstelle von A5-1 verwendet.

### Prüfergebnisse

Die Prüfergebnisse direkt nach der Herstellung jeweils gleicher Formulierungen (z.B. Zusammensetzung 10/V5 oder Zusammensetzung 1 / V6 bzw. V7 oder Zusammensetzung 26/V8) zeigten keine signifikanten Unterschiede hinsichtlich Farbton, Effekt und DOI oder Appearance (als Beispiel ist dies für Zusammensetzung 10 / V5 in Tabelle 7 gezeigt. Die Messung der Farborte der Basisbeschichtungen erfolgte mit einem Dreiwinkelmeßgerät (MMK 111 der Fa. Zeiss) bei 25, 45 und 70°-Geometrie).

Nach 3-monatiger Lagerung der einzelnen Komponenten bei 40°C wurden jedoch signifikante Unterschiede beobachtet: Dabei unterschieden sich die Eigenschaften der erfindungsgemäßen Basisfarben von denen der Vergleichsbeispiele. Ferner unterschieden sich auch die Eigenschaften der unter Verwendung dieser gelagerten Komponenten hergestellten erfindungsgemäßen Beschichtungszusammensetzungen von denen der zum Vergleich hergestellten Beschichtungszusammensetzungen.

Bei der Prüfung der Komponenten sind diese Unterschiede zum Beispiel in Tabelle 8 für A2-2 und A5-2 dargestellt. Während A2-2 nach 3 Monaten bei 40°C zur Frischabprüfung keine signifikante Farbortabweichung zeigt, ist diese bei A5-2 deutlich erkennbar.

Bei den mit A2-2 hergestellten Basisbeschichtungszusammensetzungen (Beispiel 10 in Tabelle 7, Zusammensetzung 10) traten nach Lagerung keine signifikanten Farbtonverschiebungen auf, während bei den mit A5-2 hergestellten Vergleichsbeispielen (Beispiel in Tabelle 7 V5) signifikante Unterschiede auftraten. In diesem Fall ist also die Basisfarbe A5-2 für die Verwendung in einem Mischsystem auf Grund schlechter Lagerbeständigkeit ungeeignet, während A2-2 und A1-2 geeignet sind.

Die Basisfarben A6-1 und A7-1 bildeten nach der Herstellung oder später nach erneutem Aufrühren innerhalb von 1 - 2 Stunden einen starken Bodensatz. Daher sind diese Basisfarben für die Verwendung in einer Mischmaschine ungeeignet.

Die Basisfarbe A8-1 (vergleichbar A5-1, jedoch mit entionisiertem wasser gelagert) zeigte nach 2-3 Tagen bei 30°C starke Wasserstoffentwicklung (Gasung). Die Verwendung dieser Basisfarbe in einer Mischmaschine scheidet daher aus Sicherheitsgründen aus.

Außerdem veränderte sich bei den Überzugsmitteln der Vergleichsbeispiele nach sechsmonatiger Lagerung auch das Trocknungsverhalten (Abdunstverhalten). So zeigten die Überzugsmittel der Vergleichsbeispiele V1 bis V8 nach Lagerung eine deutlich langsamere Trocknung als die frisch hergestellten Überzugsmittel V1 bis V8. Dagegen zeigten die Überzugsmittel der Beispiele 1 bis 30 vor und nach Lagerung das gleiche Trocknungsverhalten. Die Überzugsmittel der Beispiele 1 bis 25 und der Vergleichsbeispiele V1 bis V8 zeigen im Frischzustand in etwa die gleiche Trocknungsgeschwindigkeit, während nach sechsmonatiger Lagerung die Überzugsmittel V1 bis V8 wesentlich langsamer trocknen als die Überzugsmittel 1 bis 25.

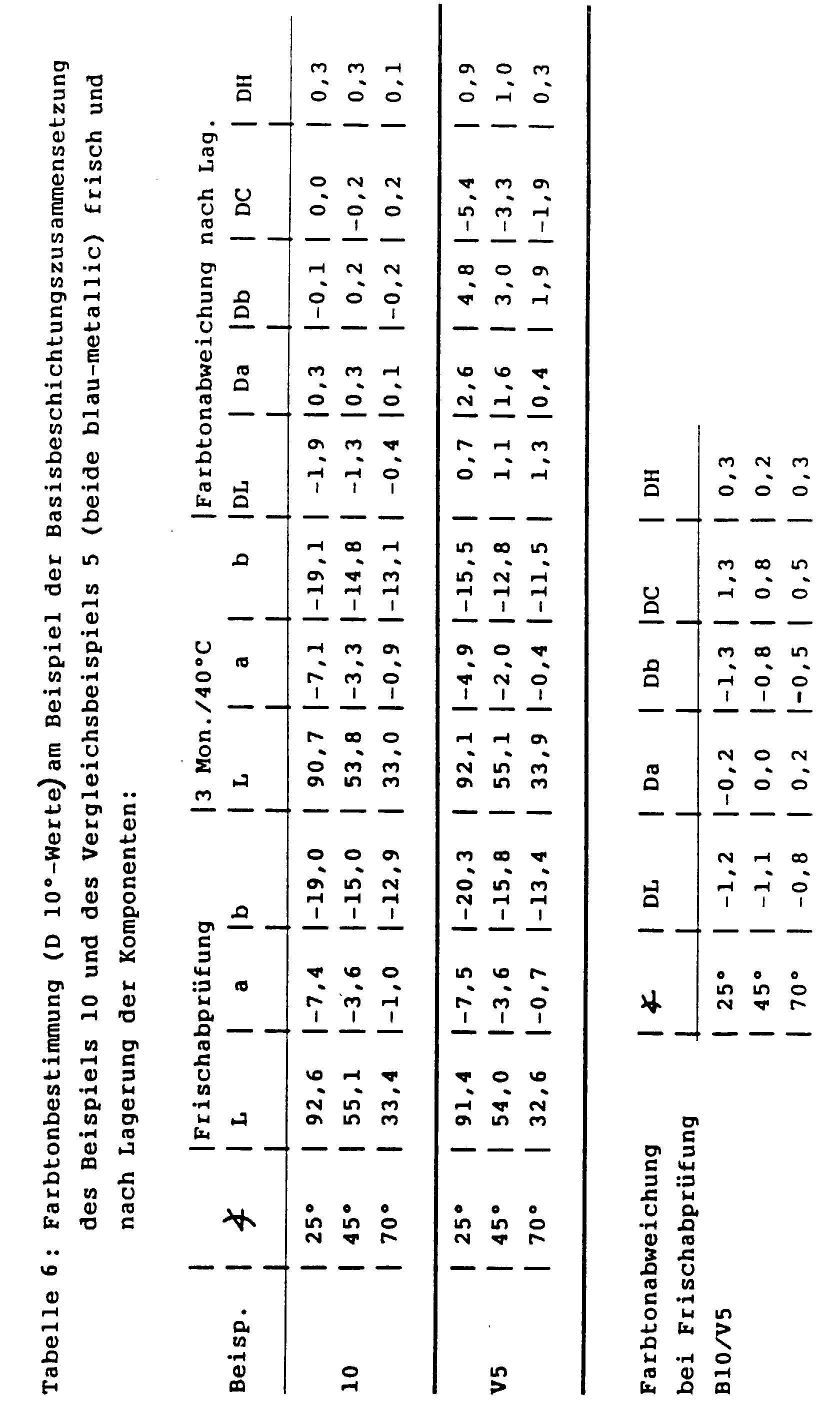

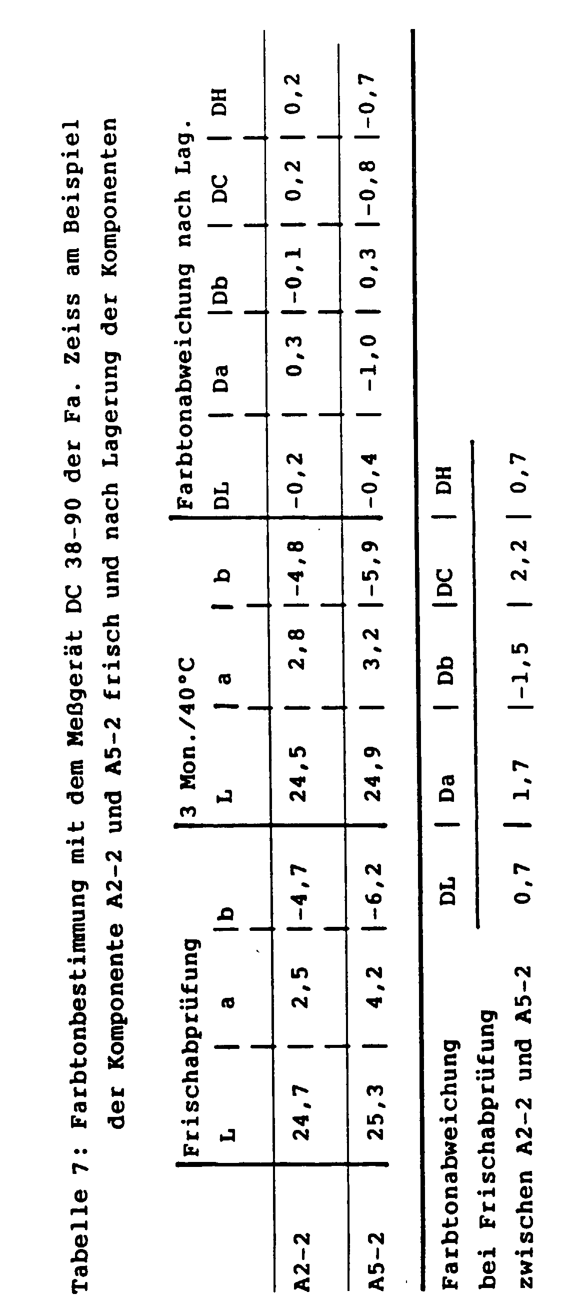

## Patentansprüche

1. Verfahren zur Herstellung einer Autoreparaturlackierung, bei dem ein mehrere Basisfarben enthaltendes Mischsystem bereitgestellt, aus dem Mischsystem ein Reparaturlack mit genau festgelegter Tönung hergestellt und anschließend appliziert und getrocknet wird,
**dadurch gekennzeichnet**, daß die Basisfarben (Komponente A) weniger als 5 % Wasser sowie
Aa) 0,5 bis 70 Gew.-% mindestens eines Effektpigments, und/oder mindestens eines farbgebenden Pigments,
Ab) 10 bis 80 Gew.-% mindestens eines wasserverdünnbaren oder wasserdispergierbaren Polyurethanharzes und/oder Aminoplastharzes und/oder Polyacrylatharzes und/oder Polyesterharzes und
Ac) mindestens ein organisches Lösemittel,
enthalten, wobei die Summe der Gewichtsanteile der Komponenten Aa) bis Ac) jeweils 100 Gew.-% beträgt, und
mit einer Komponente (B) vermischt werden, die pigmentfrei ist und Wasser, ein oder mehrere wasserverdünnbare oder wasserdispergierbare Polyurethanharze und/oder Aminoplastharze und/oder Polyesterharze sowie ggf. weitere Hilfs- und Zusatzstoffe enthält.

2. Verfahren nach Anspruch 1,
**dadurch gekennzeichnet**, daß die Komponente (A) als Komponente Aa) 1 bis 70 Gew.-% mindestens eines anorganischen farbgebenden Pigments enthält.

3. Verfahren nach einem der Ansprüche 1 oder 2,
**dadurch gekennzeichnet**, daß die Komponente (A) als Komponente Aa) 1 bis 30 Gew.-% mindestens eines organischen farbgebenden Pigments enthält.

4. Verfahren nach einem der Ansprüche 1 bis 3,
**dadurch gekennzeichnet,** daß die Komponente (B) sich zusammensetzt aus
Ba) 80 bis 97 Gew.-% Wasser,
Bb) 2 bis 5 Gew.-% mindestens eines rheologiesteuernden Additivs, wobei diese Menge auf das Gewicht des reinen Additivs ohne Lösemittelanteil bezogen ist, und
Bc) mindestens einem wasserverdünnbaren oder wasserdispergierbaren Polyurethanharz, Aminoplastharz und/oder Polyesterharz sowie
ggf. weiteren Hilfs- und Zusatzstoffen, wobei die Summe der Gewichtsanteile der Komponenten Ba) bis Bc) jeweils 100 Gew.-% beträgt.

## Claims

1. Process for the preparation of an automotive refinish, in which a mixer system comprising a plurality of base colorants is prepared, a refinish with precisely defined tinting is prepared from the mixer system and is then applied and dried,
characterized in that the base colorants (component A) contain less than 5% of water and also
Aa) from 0.5 to 70% by weight of at least one special-effect pigment, and/or at least one colour-imparting pigment,
Ab) from 10 to 80% by weight of at least one water-thinnable or water-dispersible polyurethane resin and/or amino resin and/or polyacrylate resin and/or polyester resin and
Ac) at least one organic solvent,
the sum of the proportions by weight of components Aa) to Ac) being in each case 100% by weight, and are mixed with a component (B) which is pigment-free and contains water, one or more water-thinnable or water-dispersible polyurethane resins and/or amino resins and/or polyester resins, and also, if desired, further auxiliaries and additives.

2. Process according to Claim 1,
characterized in that component (A) contains as component Aa) from 1 to 70% by weight of at least one inorganic colour-imparting pigment.

3. Process according to one of Claims 1 or 2,
characterized in that component (A) contains as component Aa) from 1 to 30% by weight of at least one organic colour-imparting pigment.

4. Process according to one of Claims 1 to 3, characterized in that component (B) is composed of
Ba) from 80 to 97% by weight of water,
Bb) from 2 to 5% by weight of at least one rheology-controlling additive, this amount being based on the weight of the pure additive excluding solvent component, and
Bc) at least one water-thinnable or water-dispersible polyurethane resin, amino resin and/or polyester resin, and also,
if desired, further auxiliaries and additives, the sum of the proportions by weight of components Ba) to Bc) being in each case 100% by weight.

## Revendications

1. Procédé de fabrication d'un laquage de réparation automobile, lors duquel l'on met à disposition un système de mélange contenant plusieurs couleurs de base, lors duquel l'on prépare à partir du système de mélange une laque de réparation ayant une teinte fixée de manière précise, et lors duquel l'on procède ensuite à son application et à son séchage, caractérisé en ce que les couleurs de base (composant A) contiennent moins de 5 % d'eau ainsi que
Aa) de 0,5 à 70 % en poids au moins d'un pigment à effet, et/ou au moins d'un pigment colorant,
Ab) de 10 à 80 % en poids au moins d'une résine de polyuréthanne et/ou d'une résine aminoplaste et/ou d'une résine de polyacrylate et/ou d'une résine de polyester, hydrodiluable ou dispersible dans l'eau, et
Ac) d'au moins un solvant organique la somme des proportions en poids des composants Aa) à Ac) étant à chaque fois de 100 % en poids, et
lors duquel l'on procède au mélange avec un composant (B), qui est exempt de pigments, et qui contient de l'eau, une ou plusieurs résines de polyuréthanne et/ou un ou plusieurs aminoplastes et/ou un ou plusieurs résines de polyester, hydrodiluables ou dispersibles dans l'eau ainsi que, le cas échéant, des additifs et adjuvants supplémentaires.

2. Procédé selon la revendication 1, caractérisé en ce que le composant (A) contient en tant que composant Aa) de 1 à 70 % en poids d'au moins un pigment colorant inorganique.

3. Procédé selon la revendication 1 ou 2, caractérisé en ce que le composant (A) contient en tant que composant Aa) de 1 à 30 % en poids d'au moins un pigment colorant organique.

4. Procédé selon l'une quelconque des revendications 1 à 3, caractérisé en ce que le composant (B) se compose
Ba) de 80 à 97 % en poids d'eau,
Bb) de 2 à 5 % en poids au moins d'un additif de contrôle de la rhéologie, cette quantité étant rapportée au poids de l'additif pur sans solvant, et
Bc) d'au moins une résine de polyuréthanne, une résine aminoplaste et/ou une résine de polyester, hydrodiluable ou dispersible dans l'eau, ainsi que,
le cas échéant, d'additifs et d'adjuvants supplémentaires, la somme des proportions en poids des composants Ba) à Bc) étant à chaque fois de 100 % en poids.
